# EUROPEAN PATENT APPLICATION

(11) **EP 4 421 030 A1**
(43) Date of publication of application: **28.08.2024**
(21) Application number: 22884028.6
(22) Date of filing: 19.10.2022
(51) Int. Cl.: C01B 32/164, C01B 32/162, B01J 19/24, B01J 19/08, B01J 13/00

(54) **CARBON NANOTUBE SYNTHESIS APPARATUS**

(30) Priority: 19.10.2021 KR 20210139496
(71) Applicant: LG Chem, Ltd., Yeongdeungpo-gu Seoul 07336 (KR); Tekna Plasma Systems Inc., Sherbrooke, Quebec J1L 2T9 (CA)
(72) Inventor: KIM, Dong Sik, Daejeon 34122 (KR); GUO, Jiayin, Sherbrooke, Québec J1K 0A3 (CA); KIM, Tae Hoon, Daejeon 34122 (KR); LEE, Hyung Jin, Daejeon 34122 (KR); MIN, Geun Gi, Daejeon 34122 (KR); SONG, Doo Hoon, Daejeon 34122 (KR); KANG, Soo Hee, Daejeon 34122 (KR); KIM, Ye Byeol, Daejeon 34122 (KR); KIM, Byoung Jin, Daejeon 34122 (KR); LEE, Sung Hyun, Daejeon 34122 (KR)
(74) Representative: Goddar, Heinz J.
(86) International application number: PCT/KR2022/015959
(87) International publication number: WO 2023/068806

(57) **Abstract**

The present invention relates to an apparatus for producing carbon nanotubes including a plasma apparatus and a CVD reactor which are connected in series, and a nanoparticle catalyst in an aerosol state prepared in the plasma apparatus is transferred into the CVD reactor to synthesize carbon nanotubes, thereby continuously synthesizing the carbon nanotubes having excellent physical properties.

## Description

### TECHNICAL FIELD

The present invention relates to an apparatus for producing carbon nanotubes which is capable of synthesizing high-quality carbon nanotubes by using a plasma apparatus and a CVD reactor in connection.

### BACKGROUND ART

Carbon nanotubes are in a nanostructure in which graphene having a thickness of one layer of carbon atoms is rolled up into a cylindrical shape, and classified into single-walled and multi-walled carbon nanotubes according to the number of layers of the surrounding shells. In general, carbon nanotubes have a diameter of several nm to several tens of nm, and a length is several ten- to several thousand-fold longer than the diameter. In addition, the carbon nanotubes can be metallic or semiconducting according to a chiral index (a value in which the diameter of the tube and the rolled angle are expressed by an integer of (n, m)). In addition, single-walled carbon nanotubes are often aligned in a "bundle" form in which several strands are aggregated by Van der Waals Force. Meanwhile, the multi-walled carbon nanotubes are composed of multi-layered shells, and the diameter and chiral index of each layer are different. In addition, the multi-walled carbon nanotubes have many defects (sp³ C, vacancy, etc.) in the crystal structure, and thus have weak mechanical properties.

Because carbon nanotubes exhibit high electrical conductivity and thermal conductivity, excellent strength, and the like as compared with conventional materials, carbon nanotubes can be effectively used in various fields such as energy, nanotechnology, optics, material engineering, and the like. For example, carbon nanotubes have mechanical properties of high elasticity of about thousands of GPa and high strength of about tens of GPa.

In terms of application, carbon nanotubes can be utilized as a conductive agent for positive and negative electrodes for lithium ion batteries, which are new electrode materials. Due to the excellent strength, conductivity, and low density of carbon nanotubes, it is possible to improve battery life and capacity when charging-discharging compared to the conventional carbon black conductive agent. In particular, single-walled carbon nanotubes have a pronounced life improvement effect when applied to a silicon negative electrode even though the amount used is 1/10 relative to multi-walled carbon nanotubes.

Various studies are also being conducted in terms of production methods for industrial use of carbon nanotubes. Conventionally, arc-discharge, laser deposition, chemical vapor deposition, and the like have been known as methods capable of synthesizing carbon nanotubes. The arc-discharge is a method for producing carbon nanotubes by inducing arc-discharge between carbon rods in an argon or hydrogen atmosphere at a pressure lower than atmospheric pressure. For example, single-walled carbon nanotubes having high purity and high crystallinity and a uniform diameter may be produced using a Ni-Y catalyst. The arc-discharge has an advantage that it is possible to obtain high-quality carbon nanotubes with few defects, but has a disadvantage that amorphous carbon is simultaneously produced and is not suitable for mass synthesis.

The laser deposition is a method for producing carbon nanotubes by emitting intense pulsed light such as a laser onto a carbon target in which a metal catalyst such as nickel or cobalt is mixed in a high temperature atmosphere of 900 °C or higher. The laser deposition has an advantage that carbon nanotubes with high purity can be produced, and the diameter of carbon nanotubes may be adjusted to some extent by changing the conditions of the emitted pulsed light, etc., but also has limitations in the mass production in consideration of the competitiveness of the production scale.

The chemical vapor deposition is the most commonly used method in the industrial field in that mass synthesis is possible. The types of chemical vapor deposition include fluidized bed chemical vapor deposition (FBCVD), floating catalyst chemical vapor deposition (FCCVD), and the like. The chemical vapor deposition is a method for producing carbon nanotubes in a gas phase by reacting a catalyst with a reaction gas including a source gas, a reducing gas, and a carrier gas at a high temperature. That is, a carbon source gas is decomposed by a nanoparticle catalyst, and thus solid carbon nanotubes are formed on the surface of the liquid nanoparticle catalyst. As a specific example, single-walled carbon nanotubes in a range of 500 °C to 900 °C may be synthesized using a Fe:Mo catalyst supported on silica and methane (CH₄) as a raw material. However, there is a limitation in terms of productivity and yield to mass-synthesize single-walled carbon nanotubes using a supported catalyst or a catalyst precursor.

Accordingly, there is a need for research on a novel method and apparatus for mass-synthesizing high-quality carbon nanotubes, which can solve the limitations of the existing method for synthesizing carbon nanotubes and is economical and consistent.

### PRIOR ART DOCUMENTS

(Patent Document 1) US 8048396 B2
(Patent Document 2) KR 10-2012-0112918 A

### DISCLOSURE OF THE INVENTION

### TECHNICAL PROBLEM

An aspect of the present invention provides an apparatus for producing carbon nanotubes which is capable of synthesizing high-quality carbon nanotubes.

### TECHNICAL SOLUTION

To solve the above-described limitations, the present invention provides an apparatus for producing carbon nanotubes.

Specifically, (1) according to an aspect of the present invention, there is provided an apparatus for producing carbon nanotubes comprising a plasma apparatus 1 and a CVD reactor 2, wherein the plasma apparatus includes a raw material feeder 11 through which a catalyst raw material is introduced, a plasma torch 12 which vaporizes the introduced catalyst raw material to form catalyst vapor, and a quenching zone 13 in which the catalyst vapor is condensed to produce a nanoparticle catalyst, and the CVD reactor is provided with a catalyst feeder 21 through which the catalyst produced in the quenching zone is introduced, a gas feeder 22 configured to introduce a source gas, and a muffle 23 in which a carbon nanotube synthesis reaction is performed.

(2) In (1) above of the present invention, there is provided the apparatus for producing carbon nanotubes, wherein the quenching zone includes a first quenching zone 131 adjacent to the plasma torch and a second quenching zone 132 adjacent to the first quenching zone.

(3) In (1) or (2) above of the present invention, there is provided the apparatus for producing carbon nanotubes, wherein the quenching zone is provided with a cooling gas feeder 130 configured to introduce a quenching gas.

(4) In any one of (1) to (3) above of the present invention, there is provided the apparatus for producing carbon nanotubes, wherein the cooling gas feeder is provided with a flow rate control means.

(5) In any one of (1) to (4) above of the present invention, there is provided the apparatus for producing carbon nanotubes, wherein each of the first quenching zone and the second quenching zone is provided with the cooling gas feeder 130 configured to introduce a quenching gas, and the second quenching zone is further provided with a hydrogen gas feeder 133 configured to introduce a hydrogen gas.

(6) In any one of (1) to (5) above of the present invention, there is provided the apparatus for producing carbon nanotubes, wherein the CVD reactor further includes a heating means for heating the inside thereof and a dispersion plate for the uniform airflow therein.

(7) In any one of (1) to (6) above of the present invention, there is provided the apparatus for producing carbon nanotubes, wherein the gas feeder includes a preheating means 221 for preheating a source gas which is introduced.

(8) In any one of (1) to (7) above of the present invention, there is provided the apparatus for producing carbon nanotubes, the apparatus further comprising a recovery apparatus 3 which is connected to the CVD reactor and is for recovering the synthesized carbon nanotubes in the form of powder.

(9) In any one of (1) to (8) above of the present invention, there is provided the apparatus for producing carbon nanotubes, wherein the recovery apparatus includes at least one from among a cyclone and a filter.

(10) In any one of (1) to (9) above of the present invention, there is provided the apparatus for producing carbon nanotubes, wherein the apparatus is continuously operated.

(11) In any one of (1) to (10) above of the present invention, there is provided the apparatus for producing carbon nanotubes, wherein the synthesized carbon nanotubes are single-walled carbon nanotubes, multi-walled carbon nanotubes, or a mixture thereof.

(12) In any one of (1) to (11) above of the present invention, there is provided the apparatus for producing carbon nanotubes, wherein the synthesized carbon nanotubes are in the form of powder.

### ADVANTAGEOUS EFFECTS

When the apparatus for producing carbon nanotubes of the present invention is used, high-quality carbon nanotubes can be produced in a shorter time as compared with a conventional method for producing carbon nanotubes using supported catalyst and a fluidized bed reactor.

In addition, the apparatus for producing carbon nanotubes of the present invention can be continuously operated to efficiently produce carbon nanotubes, and can produce carbon nanotubes having excellent physical properties by controlling the particle size of the nanoparticle catalyst prepared using a plasma apparatus within an appropriate range. Furthermore, the apparatus for producing carbon nanotubes of the present invention can control process variables in the catalyst preparation process and control process variables in the carbon nanotube synthesis process independently because the plasma device for preparing the catalyst and the CVD reactor for synthesizing the carbon nanotubes are physically separated, and thus the use of the apparatus for producing carbon nanotubes of the present invention may easily optimize the overall carbon nanotube synthesis process.

### BRIEF DESCRIPTION OF THE DRAWINGS

FIG. 1 illustrates a diagram of an apparatus for producing carbon nanotubes according to an embodiment of the present invention.
FIG. 2 illustrates a process flowchart of the apparatus for producing carbon nanotubes according to an embodiment of the present invention.
FIG. 3 is obtained by observing carbon nanotubes produced in Example 3 of the present invention with an SEM image at a magnification of 100K.
FIG. 4 is obtained by observing carbon nanotubes produced in Example 3 of the present invention with an SEM image at a magnification of 50K.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Apparatus for Producing Carbon Nanotubes

A commonly used method for producing a large amount of carbon nanotubes in the industrial field is using a fluidized bed reactor. Specifically, in the above method, carbon nanotubes are produced by filling a fluidized bed reactor with a carrier including a metal catalyst, then injecting a source gas to the reactor, and heating the reactor to grow carbon nanotubes on the surfaces of catalyst particles. Such fluidized bed chemical vapor deposition (FBCVD) has an advantage that a large amount of carbon nanotubes can not only be produced, but carbon nanotubes can also be stably stabilized, but has the following disadvantages.
1) When carbon nanotubes are synthesized using a fluidized bed reactor, there is a limit to the improvement in the quality of carbon nanotubes. The catalyst applied to the fluidized bed reactor is prepared by sintering a metal catalyst precursor. Because the catalyst prepared by such a method has a relatively wide particle size distribution, the uniformity of the diameters of the carbon nanotubes prepared by the catalyst slightly deteriorates, thereby making it difficult to obtain uniform carbon nanotube products. In addition, due to the characteristics of the fluidized bed reactor, the carbon nanotubes, which have been already synthesized, are filled in the reactor and used, and thus the growth time for each of the carbon nanotubes may not be constant, and this phenomenon may also deteriorate the uniformity of the finally produced carbon nanotubes. Furthermore, multi-walled carbon nanotubes synthesized at 800 °C or less have a crystallinity (I_{G}/I_{D} ratio) of 1, which is low, and thus have a disadvantage that mechanical properties thereof are weak.
2) When carbon nanotubes are synthesized using a fluidized bed reactor, there is a limit to the improvement in the efficiency of the production process. When the fluidized bed reactor is used, it is necessary to fill the inner space of the reactor with a bed before the operation of the reactor, and it is necessary to obtain the grown carbon nanotubes even after the completion of the reaction, thereby making it difficult to implement a continuous production process. In addition, because a time to heat the reactor is required even after the reaction is started, the actual time consumed for the reaction is less relative to the total operation time of the process, and thus there is a limit to the improvement in the efficiency of the production process in terms of time.

Accordingly, the present invention is to suggest an apparatus for producing carbon nanotubes, which can improve the efficiency of the production process of the carbon nanotubes in terms of time and secure the uniformity and quality of the synthesized carbon nanotubes.

Specifically, the present invention provides an apparatus for producing carbon nanotubes including a plasma apparatus 1 and a CVD reactor 2, wherein the plasma apparatus includes a raw material feeder 11 through which a catalyst raw material is introduced, a plasma torch 12 which vaporizes the introduced catalyst raw material to form catalyst vapor, and a quenching zone 13 in which the catalyst vapor is condensed to produce a nanoparticle catalyst, and the CVD reactor is provided with a catalyst feeder 21 through which the catalyst produced in the quenching zone is introduced, a gas feeder 22 configured to introduce a source gas, and a muffle 23 in which a carbon nanotube synthesis reaction is performed.

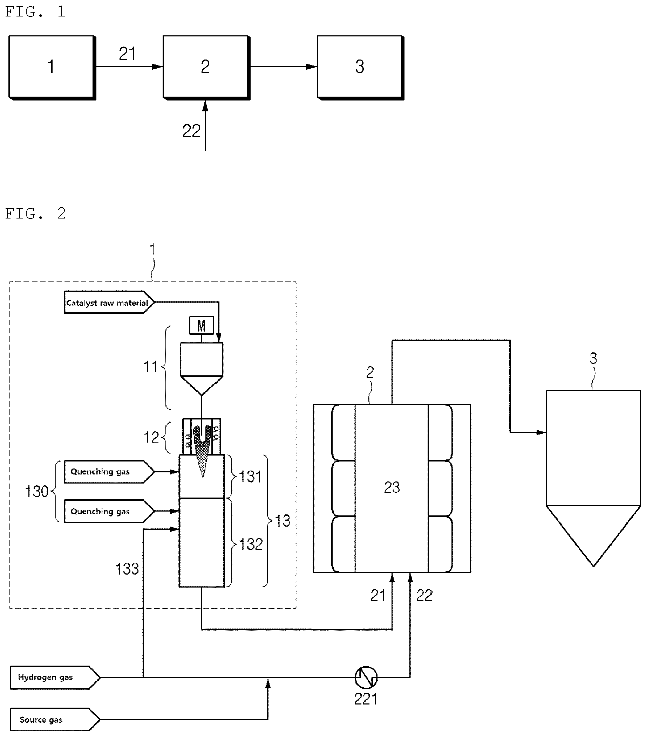

As illustrated in FIGS. 1 and 2, the apparatus for producing carbon nanotubes mainly includes the plasma apparatus and the CVD reactor, and hereinafter, each apparatus of the present invention will be described separately.

### Plasma apparatus

In terms of a catalyst for synthesizing carbon nanotubes, when a nanoparticle catalyst in an aerosol state is prepared using a plasma apparatus, it is possible to produce uniform carbon nanotubes at high speed because the average particle diameter of the catalyst particles is small and the particle size distribution thereof is narrow. Accordingly, the apparatus for producing carbon nanotubes of the present invention prepares a nanoparticle catalyst in an aerosol state using a plasma apparatus, more specifically, an inductively coupled radio-frequency (RF) plasma apparatus, and introduces the prepared catalyst together with a source gas into a high-temperature CVD reactor to synthesize carbon nanotubes.

Specifically, the inductively coupled plasma apparatus includes a raw material feeder 11 through which a catalyst raw material is introduced, a plasma torch 12 which vaporizes the introduced catalyst raw material to form catalyst vapor, and a quenching zone 13 in which the catalyst vapor is condensed to produce a nanoparticle catalyst.

The raw material feeder is for introducing a catalyst raw material into the plasma apparatus. The form or type of the raw material feeder may vary with the state and form of the metal raw material to be introduced, and a person skilled in the art may select and apply an appropriate raw material feeder according to the state and form of the catalyst raw material. The catalyst raw material may be in the form of liquid or solid, and more specifically, may be a solution in which a precursor of the catalyst raw material is dissolved in a liquid, a catalyst raw material precursor in the form of powder, or a metal itself, and in particular, when the catalyst raw material is in the form of powder, powder flowability should be good so as to facilitate the introduction into the plasma apparatus. Therefore, when the catalyst raw material is powder, the raw material feeder may have a form having excellent powder flowability, for example, a form having an inclined structure.

Meanwhile, the plasma apparatus may include a plasma torch. The plasma torch is for forming plasma to vaporize the introduced catalyst raw material, and may be used as the plasma torch of the present invention without particular limitation as long as it is known to a person skilled in the art. The plasma torch may use, as a working gas, a gas such as argon, hydrogen, or nitrogen alone or in combination.

More specifically, the plasma torch may be an inductively coupled RF plasma torch. The high energy density RF thermal plasma formed from the inductively coupled RF plasma torch has a temperature, which is an ultra-high temperature, sufficient to vaporize the catalyst raw material, and the vaporizing rate at this time is about 99%. The catalyst vapor formed by vaporizing the catalyst raw material is transferred to the quenching zone due to convection and diffusion, thereby forming a vapor concentration profile. The catalyst vapor is then condensed to produce a nanoparticle catalyst in an aerosol state, and uniformity in the catalyst vapor may be improved through convection and diffusion in the transfer process, thereby effectively producing a nanoparticle catalyst.

More specifically, when the catalyst vapor is transferred through convection and diffusion, the particle size distribution of the nanoparticle catalyst may be obtained in the form of lognormal, and the distribution may be narrow. On the other hand, when the catalyst vapor is directly condensed without convection and diffusion after the formation of the catalyst vapor, some of the catalyst raw material powder, which has not been completely vaporized during the condensation process, may be mixed with nanoparticles, and furthermore, it is difficult to condense the catalyst vapor effectively, and thus the particle size distribution of the subsequent obtained nanoparticle catalyst may be obtained in the form of bimodal, and the distribution may be wide.

Meanwhile, because the internal space of the plasma apparatus including the quenching zone may be a reactor made of a high-temperature refractory material such as graphite, and the temperature of the inner center line of the reactor should be at least 3,000 K, other suitable reactor structures and materials having high-temperature refractory properties may be selected and applied.

The transferred catalyst vapor may be quenched and condensed to form a nanoparticle catalyst in an aerosol state. For example, iron vapor is known to be condensed at about 1,820 K and undergo nuclear growth of the nanoparticles. During the quenching process, the faster the cooling rate, the shorter the growth time of the solid particles, so that it is possible to prepare a nanoparticle catalyst with a narrow particle size distribution and a small average particle size.

The quenching may be performed by introducing a quenching gas into the quenching zone, and to this end, the quenching zone may be provided with a quenching gas feeder. An appropriate gas selected from among cooling gases known to be used for cooling may be selected as the quenching gas and may be applied to the present invention, for example, an argon or nitrogen gas may be applied as the cooling gas.

Meanwhile, specifically, the quenching gas feeder is not particularly limited as long as it is for introducing gas into the quenching zone, and may have a shape such as a line directly connected to the quenching zone, and particularly preferably, may have a pore shape provided on the wall surface of the quenching zone so that uniform cooling is performed throughout the quenching zone. The size or shape of the pores is not particularly limited, and a person skilled in the art may select an appropriate size and shape of the pores in consideration of factors such as the type of gas used for cooling, the temperature of the cooling gas, and the temperature of the plasma.

In addition, the cooling gas feeder may include a flow rate control means. It is possible to control the average particle diameter of the nanoparticle catalyst by controlling the flow rate of the gas used in the quenching.

Meanwhile, as illustrated in FIG. 2, the quenching zone may include a first quenching zone 131 adjacent to the plasma torch and a second quenching zone 132 adjacent to the first quenching zone, each of the first quenching zone and the second quenching zone may include a cooling gas feeder 130 for introducing a quenching gas, and the second quenching zone may further include a hydrogen gas feeder 133 for introducing a hydrogen gas.

As described above, when the quenching zone is divided into two zones and the types of gas introduced in each zone are different, there is a favorable technical advantage in terms of controlling the size of the nanoparticle catalyst.

### CVD reactor

The nanoparticle catalyst in an aerosol state prepared in the plasma apparatus as described above is used to synthesize carbon nanotubes in the CVD reactor 2, and specifically, the CVD reactor may include a catalyst feeder 21 through which the catalyst produced in the quenching zone is introduced, a gas feeder 22 through which a source gas is introduced, and a muffle 23 in which a carbon nanotube synthesis reaction is performed. In addition, the CVD reactor may further include a heating means for heating the inside of the reactor, or may be provided with a dispersion plate for enabling uniform airflow. The floating reactor may be a reactor used in typical chemical vapor deposition (CVD), catalytic chemical vapor deposition (CCVD), or floating catalyst chemical vapor deposition (FCCVD).

The catalyst feeder is for introducing the nanoparticle catalyst in an aerosol state formed in the plasma apparatus as described above into the CVD reactor, and may be connected to the outlet of the quenching zone of the plasma apparatus in which the nanoparticle catalyst in an aerosol state is finally formed. The catalyst feeder should be in the form in which the nanoparticle catalyst in an aerosol state can be smoothly introduced, and may be particularly preferable to be positioned in the lower part of the CVD reactor so that the catalyst may be uniformly distributed and floated in the CVD reactor and the carbon nanotubes may be synthesized.

The gas feeder is for introducing a source gas, which is a raw material of carbon nanotubes, into the CVD reactor. The gas feeder is not particularly limited as long as it is a means for introducing the gas into the reactor, and is preferably provided at the inlet side of the CVD reactor in order to smoothly mix the nanoparticle catalyst introduced from the plasma apparatus with the source gas. In addition, the source gas introduced through the gas feeder may be heated to 200 °C or higher before being introduced into the CVD reactor, and then introduced, and to this end, the gas feeder may further include a preheating means 221.

Meanwhile, the source gas is a carbon source gas which may be decomposed by the nanoparticle catalyst and produce solid carbon nanotubes on the surface of liquid nanoparticle catalyst, and as a specific example, various carbon-containing compounds such as aliphatic alkane, aliphatic alkene, aliphatic alkyne, and aromatic compounds may be used, more specifically, at least one selected from the group consisting of carbon monoxide, natural gas, C1-C10 aliphatic hydrocarbon, C6-C20 aromatic hydrocarbon, C1-C6 alcohol, and acetone may be included, and still more specifically, a compound such as methane, ethane, ethylene, acetylene, methylacetylene, vinylacetylene, propane, butane, pentane, hexane, propylene, carbon monoxide, natural gas, butadiene, benzene, toluene, cyclopentadiene, cyclohexane, ethanol, methanol, propanol, or acetone may be used. It is particularly preferable to use methane in terms of economics and efficiency.

Meanwhile, the apparatus for producing carbon nanotubes of the present invention may further include a recovery apparatus 3 which is connected to the CVD reactor and is for recovering the carbon nanotubes synthesized in the CVD reactor, and the recovery apparatus may include at least one from among a cyclone and a filter. The carbon nanotubes synthesized in the CVD reactor may be obtained while being grown in a nanoparticle catalyst, and accordingly, a recovery apparatus for selectively separating only solid powder may be required, and a cyclone or filter commonly applied for separating solids from a gas-solid mixture may be applied to the recovery apparatus of the present invention.

The apparatus for producing carbon nanotubes of the present invention may be continuously operated. In the apparatus for producing carbon nanotubes of the present invention, the preparation of the nanoparticle catalyst may be performed continuously in accordance with the introduction of the catalyst raw material, and the source gas may also be continuously introduced by the gas feeder, and thus the operation of overall apparatus may be performed continuously. In the case of a conventional system for producing carbon nanotubes using a supported catalyst and a fluidized bed reactor, the system generally operates in a batch manner since a step for filling the inside of the reactor with a support before starting a reaction and obtaining the finally produced carbon nanotubes from the reactor is required, but when the apparatus for producing carbon nanotubes of the present invention is used, continuous production is possible, and thus carbon nanotubes may be efficiently produced as compared with the conventional system.

The carbon nanotubes produced in the production apparatus of the present invention may be single-walled carbon nanotubes, multi-walled carbon nanotubes, or a mixture thereof. In addition, the carbon nanotubes produced in the production apparatus of the present invention may be in the form of powder.

The carbon nanotubes produced in the production apparatus of the present invention may be bundled. That the carbon nanotubes are "bundled" means that a plurality of carbon nanotubes are arranged or aligned in parallel in a certain direction to form a secondary structure in the form of a bundle or a rope, and the bundled carbon nanotubes may be bundled and thus may be particularly suitable for use as a conductive agent, *etc.*

Hereinafter, the present invention will be described in more detail with reference to examples and experimental examples in order to specifically describe the present invention, but is not limited to the examples and experimental examples. The examples according to the present invention may be modified in various different forms, and the scope of the present invention should not be interpreted to be limited to the examples described below. Rather, the examples of the present invention will be provided so that the present invention will be described in more detail to those skilled in the art.

### Materials

As a catalyst raw material, Fe powder and FeS powder having a particle size of 10 um to 50 um were mixed and used, and moisture was removed in advance by drying the catalyst raw material in a vacuum oven before the catalyst material was introduced into a feeder.

### Example 1

The apparatus for producing carbon nanotubes illustrated in FIG. 2 was used to synthesize carbon nanotubes. In order to ignite plasma in a vacuum state, Ar (32 lpm) and H₂ (1.4 lpm) were injected into a plasma torch with a sheath gas and Ar (12 lpm) was injected into a central gas. After the ignition was completed, the pressure in plasma equipment was normal pressure (14.7 psi), and the catalyst raw material (FeS content of 16 wt%) was supplied to the feeder (carrier gas: Ar, flow rate: 5 lpm) of RF thermal plasma equipment to vaporize the catalyst raw material in the plasma torch. The formed catalyst vapor was transferred to the quenching zone through convection and diffusion, and 75 lpm and 175 lpm of the quenching gas, Ar, were injected into the first quenching zone and the second quenching zone, respectively, to quench and condense the catalyst vapor. Meanwhile, in the second quenching zone, a H₂ gas was injected with Ar at a flow rate of 30 lpm. The catalyst vapor that passed through both the first quenching zone and the second quenching zone was condensed to form a nanoparticle catalyst in an aerosol state, which was then introduced to the CVD reactor previously heated to 1,350 °C.

In addition, a methane gas, which is a source gas, was injected into the CVD reactor at a flow rate of 4 lpm separately from the nanoparticle catalyst, and the methane gas was passed through a preheating device heated to 500 °C before the injection.

The nanoparticle catalyst and the source gas were introduced into the CVD reactor, and at the same time, the synthesis of carbon nanotubes was started, and a synthesis process was performed for 20 minutes. After the process was completed, gas injection was stopped and the CVD reactor was cooled to obtain carbon nanotubes.

### Example 2

Carbon nanotubes were obtained in the same manner as in Example 1, except that the mixture having a FeS content of 20 wt% was used as the catalyst raw material, the temperature of the CVD reactor was heated to 1,400 °C, and the methane gas was injected into the CVD reactor at a flow rate of 3 lpm and the hydrogen gas at a flow rate of 9.5 lpm.

### Example 3

Carbon nanotubes were obtained in the same manner as in Example 2, except that the methane gas was injected into the CVD reactor at a flow rate of 3 lpm and the hydrogen gas at a flow rate of 50 lpm.

### Comparative Example 1

Carbon nanotubes were obtained in the same manner as in Example 2, except that 4 lpm of methane gas and 9.5 lpm of hydrogen gas were premixed with a nanoparticle catalyst in an aerosol state using a small chamber before injected into the CVD reactor, and then injected into the CVD reactor, and the CVD reactor was heated to 1,300 °C.

The production conditions in Examples and Comparative Example are summarized and shown in Table 1 below.

**[Table 1]**

| | Example 1 | Example 2 | Example 3 | Comparative Example 1 |
|---|---|---|---|---|
| FeS content in catalyst raw material (wt%) | 16 | 20 | 20 | 20 |
| Reactor temperature (°C) | 1350 | 1400 | 1400 | 1300 |
| Methane gas flow rate (lpm) | 4 | 3 | 3 | 4 |
| Hydrogen gas flow rate (lpm) | 30 | 9.5 | 50 | 9.5 |
| Injection position of methane gas | CVD reactor | CVD reactor | CVD reactor | Small chamber |

### Experimental Example 1. Identification of Crystallinity of Produced Carbon Nanotubes

The I_{G} and I_{D} values of the carbon nanotubes produced in the Examples and Comparative Example were determined using a Raman spectrum, and the mean crystallinity and the maximum crystallinity were calculated, and the results are shown in Table 2 below.

**[Table 2]**

| | Example 1 | Example 2 | Example 3 | Comparative Example 1 |
|---|---|---|---|---|
| Mean crystallinity | 29 | 32 | 64 | 0.736 |
| Maximum crystallinity | 48 | 76 | 99 | 0.867 |

As can be seen from Table 2 above, the carbon nanotubes produced in Examples of the present invention showed high crystallinity with a maximum crystallinity of 40 or more, whereas the carbon nanotubes produced in Comparative Example 1 showed a crystallinity of less than 1. That is, this means that the crystallinity of the carbon nanotubes produced in Comparative Example 1 is significantly decreased compared to Examples, and that the high-quality carbon nanotubes can be produced using the method for producing carbon nanotube of the present invention.

### Experimental Example 2. Confirmation of SEM Images of Carbon Nanotubes Produced in Examples

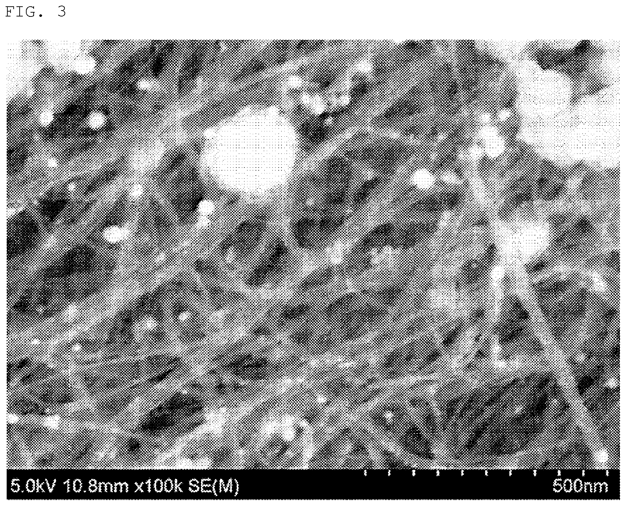

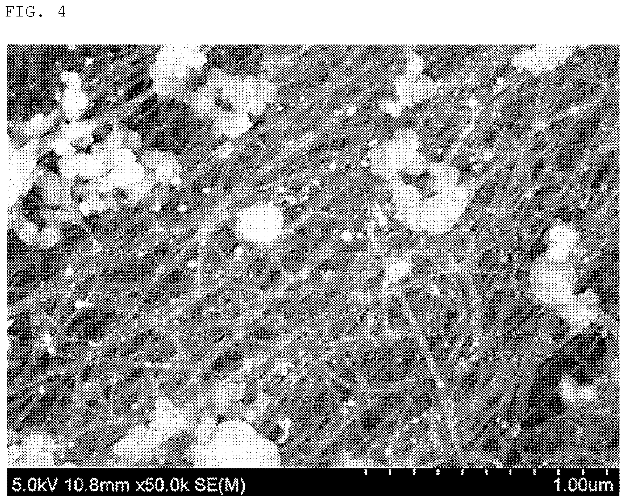

The carbon nanotubes produced in Example 3 were observed through an SEM image. The carbon nanotubes were observed at a magnification of 100K and 50K, and the results are shown in FIGS. 3 and 4.

As can be seen in FIGS. 3 and 4, it was confirmed that when the method for producing carbon nanotubes of the present invention is used, several strands of thin and flexible carbon nanotubes were produced in a bundled form.

### Description of the Symbols

1: Plasma apparatus
11: Raw material feeder
12: Plasma torch
13: Quenching zone
130: Cooling gas feeder
131: First quenching zone
132: Second quenching zone
133: Hydrogen gas feeder
2: CVD reactor
21: Catalyst feeder
22: Gas feeder
221: Preheating means
23: Muffle
3: Recovery apparatus

## Claims

1. An apparatus for producing carbon nanotubes comprising:
a plasma apparatus (1); and
a CVD reactor (2),
wherein the plasma apparatus comprises a raw material feeder (11) through which a catalyst raw material is introduced, a plasma torch (12) which vaporizes the introduced catalyst raw material to form catalyst vapor, and a quenching zone (13) in which the catalyst vapor is condensed to produce a nanoparticle catalyst, and
the CVD reactor is provided with a catalyst feeder (21) through which the catalyst produced in the quenching zone is introduced, a gas feeder (22) configured to introduce a source gas, and a muffle (23) in which a carbon nanotube synthesis reaction is performed.

2. The apparatus of claim 1, wherein the quenching zone comprises:
a first quenching zone (131) adjacent to the plasma torch; and
a second quenching zone (132) adjacent to the first quenching zone.

3. The apparatus of claim 1, wherein the quenching zone is provided with a cooling gas feeder (130) configured to introduce a quenching gas.

4. The apparatus of claim 3, wherein the cooling gas feeder is provided with a flow rate control means.

5. The apparatus of claim 2, wherein each of the first quenching zone and the second quenching zone is provided with the cooling gas feeder (130) configured to introduce a quenching gas, and
the second quenching zone is further provided with a hydrogen gas feeder (133) configured to introduce a hydrogen gas.

6. The apparatus of claim 1, wherein the CVD reactor further comprises a heating means for heating the inside thereof and a dispersion plate for the uniform airflow therein.

7. The apparatus of claim 1, wherein the gas feeder comprises a preheating means (221) for preheating a source gas which is introduced.

8. The apparatus of claim 1, further comprising a recovery apparatus (3) which is connected to the CVD reactor and is for recovering the synthesized carbon nanotubes in the form of powder.

9. The apparatus of claim 8, wherein the recovery apparatus comprises at least one from among a cyclone and a filter.

10. The apparatus of claim 1, wherein the apparatus is continuously operated.

11. The apparatus of claim 1, wherein the synthesized carbon nanotubes are single-walled carbon nanotubes, multi-walled carbon nanotubes, or a mixture thereof.

12. The apparatus of claim 1, wherein the synthesized carbon nanotubes are in the form of powder.
